# EUROPÄISCHE PATENTSCHRIFT

(11) **EP 1 385 706 B1**
(45) Veröffentlichungstag und Bekanntmachung des Hinweises auf die Patenterteilung: **26.01.2005**
(21) Anmeldenummer: 02745269.7
(22) Anmeldetag: 26.04.2002
(51) Int. Cl.: B60B 27/00, F16D 65/12, F16D 65/847

(54) **RADNABE**
WHEEL HUB
MOYEU DE ROUE

(30) Priorität: 30.04.2001 DE 10121124; 17.07.2001 DE 10133985
(43) Veröffentlichungstag der Anmeldung: 04.02.2004
(73) Patentinhaber: KNORR-BREMSE SYSTEME FÜR NUTZFAHRZEUGE GMBH, 80809 München (DE)
(72) Erfinder: BAUMGARTNER, Johann, 85368 Moosburg (DE); PAHLE, Wolfgang, 74080 Heilbronn (DE)
(86) Internationale Anmeldenummer: PCT/EP2002/004634
(87) Internationale Veröffentlichungsnummer: WO 2002/087901

(56) Entgegenhaltungen:
- DE-A- 19 537 808
- DE-A- 19 628 331
- US-A- 5 281 004

## Beschreibung

Die Erfindung betrifft eine Radnabe zur Aufnahme einer Bremsscheibe, insbesondere eine Radnabe für Nutzfahrzeuge, mit einem an den Radflansch angeformten Nabenkörper, der einen Halsabschnitt aufweist, der zur Aufnahme der Bremsscheibe ausgelegt ist nach dem Oberbegriff des Anspruchs 1.

Derartige Radnaben werden an angetriebenen und nicht angetriebenen Achsen von Straßenfahrzeugen, insbesondere von Nutzfahrzeugen, mit Scheibenbremsen eingesetzt. Eine gattungsgemäße Nabe ist aus der US-A-5 281 004 bekannt, zum Stand der Technish werden noch die DE 196 28 331 A und die DE 195 37 808 A genannt.

Ein Problem derartiger Radnaben ist die Wärmebelastung der Radlagerung und des Schmiermittels infolge der Wärmeentwicklung im Radlager sowie u.U. auch infolge der Wärmeübertragung von der Bremsscheibe auf den Nabenkörper.

. Bei hoher Beladung des Fahrzeuges ergibt sich infolge entstehenden Reibung im Lager zwangsläufig eine starke Wärmeentwicktung im Radlager. Erhöht werden kann die Wärmeentwicklung durch die Erwärmung der Bremsscheibe bei Bremsungen. Da die Bremsscheibe zum Zweck der Bremsmomentübertragung mit der Radnabe mechanisch (einteilig oder mehrstückig) verbunden ist, wird ein Teil der in der Bremsscheibe erzeugten Wärme auf die Radnabe übertragen. Die Wärmeentwicklung im Radlager ist ebenso wie die Wärmeentwicklung in der Bremsscheibe in etwa dem Beladungszustand des Fahrzeuges bzw, der Belastung des jeweiligen Rades proportional. Bei hoher Beladung des Fahrzeuges -verbunden mit einet bremsenintensiven Fahrweise, z.B. bei Fahrten in gebirgigen Regionen kann die auftretende Wärmebelastung der Radnabe relativ hoch sein.

Je nach Ausführungsart der Bremsscheibe und der Art der Nabenanbindung ergeben sich unterschiedliche Bedingungen für die Wärmebelastung und Abkühlung der Radnabe.

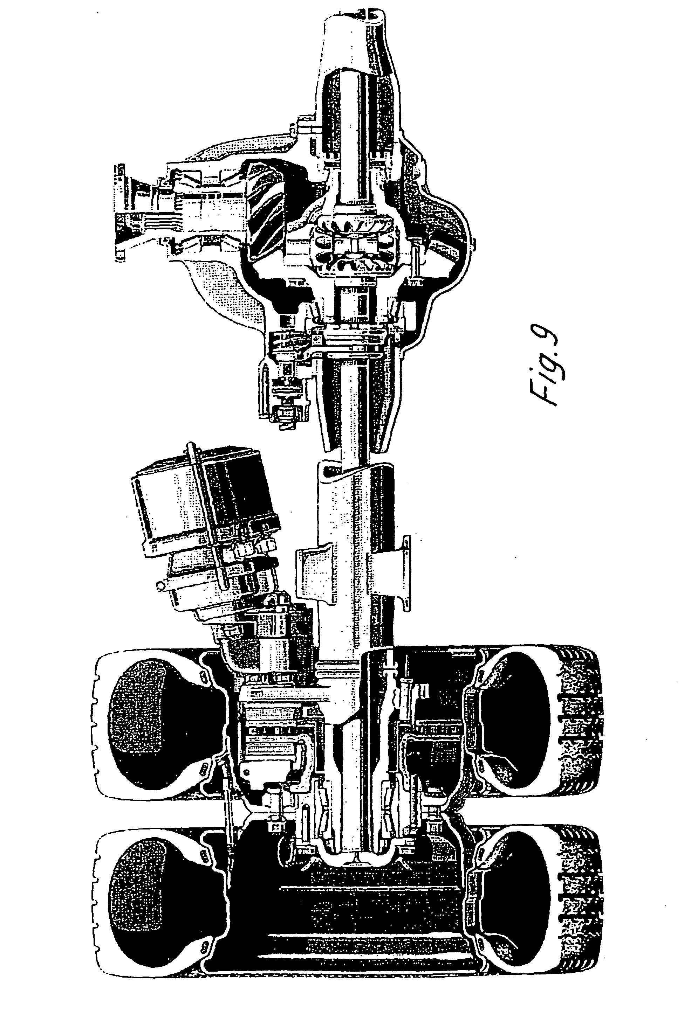

In den Darstellungen Fig. 8 bis 11 sind unterschiedliche Radnaben/Bremsscheiben-Kombinationen dargestellt.

Fig. 8 zeigt eine Radnaben/Bremsscheibenkombination, bei welcher die Bremsscheibe zum Zweck der Befestigung an die Radnabe mit einem Hals und einem Flansch versehen ist und über diesen Flansch mittels der Radbolzen, die auch zur Befestigung des Fahrzeugrades an die Radnabe dienen, mit der Radnabe verbunden ist. Bei dieser Konstruktionsart ist nur eine geringe Wärmeübertragung durch direkte Wärmeleitung von der Bremsscheibe auf den Lagerbereich Radnabe gegeben, da die Befestigung und der damit verbundene wärmeleitende Kontakt der Bremsscheibe auf die Radnabe an der äußeren Peripherie derselben erfolgt.
Weniger optimal ist dagegen die Ummantelung des Nabenkörpers durch den Bremsscheibenhals, welche einerseits eine Wärmestrahlung vom Bremsscheibenhals auf die Oberfläche des Nabenkörpers zur Folge hat und andererseits die Abfuhr der im Radlager entstehenden Reibungswärme an die Umgebung behindert.

Fig. 9 zeigt eine ähnliche Naben/Bremsscheibenkombination, bei der die Bremsscheibe mit einem separaten Schraubflansch an der Radnabe befestigt ist. Die Wärmeübertragungs- und Wärmeabführverhältnisse entsprechen im wesentlichen Fig. 8.

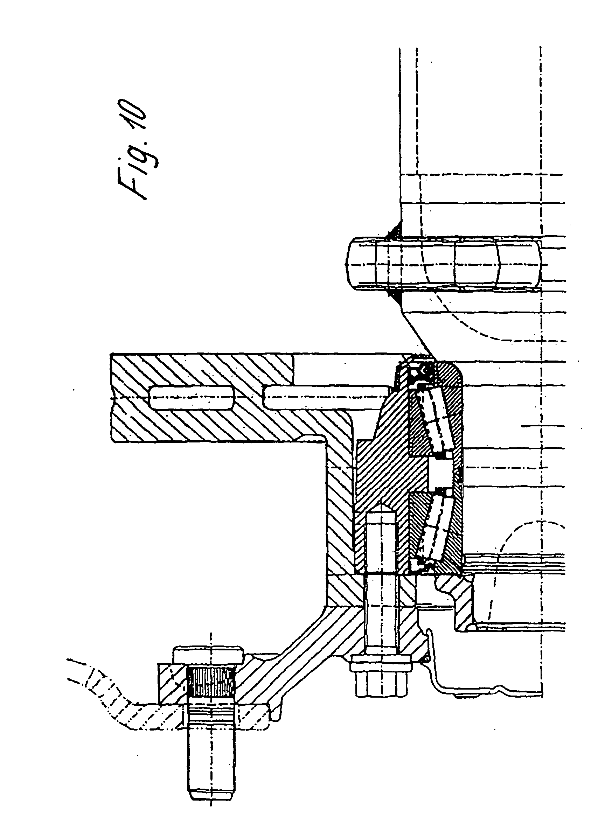

Fig. 10 zeigt eine weitere, zweiteilige Radnaben/Bremsscheiben-Kombination, bei der die Radnabe in einen das Radlager aufnehmenden Nabenteil (Halsabschnitt) und den das Fahrzeugrad tragenden Radflansch unterteilt ist und die mit einem Hals und nach Innen gezogenen Ringflansch ausgestattete Bremsscheibe zwischen dem Nabenteil und dem Radflansch durch ein Verschrauben dieser beiden Teile eingeklemmt ist. Bei dieser Bauart ergibt sich neben der eingeschränkten Wärmeabfuhr über die Mantelfläche der Nabe infolge der Umhüllung durch den Bremsscheibenhals das Problem, dass der Nabenteil vom Radflansch durch die dazwischen geklemmte Bremsscheibe getrennt ist und damit die Wärmeabführkapazität des Radflansches für die Nabe nicht genutzt wird.

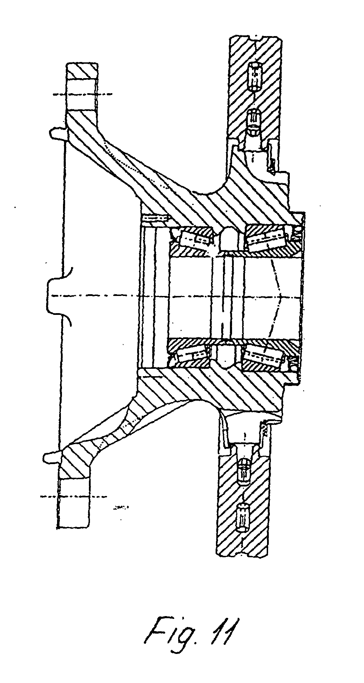

Fig. 11 zeigt eine gattungsgemäße Radnaben/Bremsscheibenkombination, bei der eine innenbelüftete Bremsscheibe mit zwei Reibringen über ein am inneren Durchmesser erzeugtes nicht kreisförmiges Profil, z.B. eine Verzahnung, in eine im wesentlichen entgegengesetzt gestaltete Kontur am Umfang der Radnabe eingreift. Der wärmeleitende Kontakt der Bremsscheibe zur Radnabe wird vorzugsweise durch wärmeisollerende Zwischenelemente unterbrochen, um so die Wärmebelastung der Radnabe zu reduzieren. Die Bremsscheibe kann dabei mit dem Nabenkörper lösbar verbunden sein oder auch unlösbar, z.B. in einem Vertwndgußverfahren auf die Radnabe gefügt sein. Da als Folge der wärmeisolierenden Zwischenelemente nur eine geringe Wärmeabfuhr aus der Bremsscheibe über die Radnabe erfolgt, weisen derartige Bremsscheiben etwas höhere Betriebstemperaturen auf als die vorbeschriebenen Hals -und Topf- Bremsscheiben. Es fehlt dagegen die Ummantelung des Nabenkörpers durch den (nicht vorhandenen Bremsscheibenhals), wodurch eine verbesserte Wärmeatsfuhr aus der Radnabe möglich ist.

Gegenüber dieser an sich bereits zufriedenstellen wärmeabführenden Konstruktion ist es die Aufgabe der Erfindung, die Radnabe derart auszugestalten, dass die Wärmeabgabe an die Umgebung insbesondere bei Bremsungen verbessert wird.

Die Erfindung löst diese Aufgabe durch den Gegenstand des Anspruchs 1.

Vorteilhafte Ausgestaltungen sind den Unteransprüchen zu entnehmen.

Nach der Erfindung ist der Halsabschnitt zunächst in dem sich an den Bereich zum Aufsetzen der Bremsscheibe anschließenden axialen Bereich mit einer -vorzugsweise relativ zu einer gleichmäßigen oder sich verjüngenden oder verbreiternden Zylinderfläche-die Wärmeabgabe an die Umgebung vergrößemden Oberflächenstruktur versehen. Durch diese einfache und kostengünstige Maßnahme lässt sich die Wärmegabe der Radnabe an die Umgebungsluft effektiv vergrößern. Besonders geeignet ist die Erfindung für eine zweiteilige Ausgestaltung von Radnabe und Bremsscheibe, bei der die Bremsscheibe auf die Radnabe aufgesetzt wird. Die Erfindung realisiert zusammengefasst eine Radnabe für eine Radnaben/Bremsscheiben-Kombination mit einer ebenen, zahnangebundenen Bremsscheibe, bei der die frei liegende Radnabenoberfläche im Sinne einer verbesserten Wärmeabfuhr aus der Radnabe und der Bremsscheibe genutzt wird. Auf diese Weise wird effektvoll eine thermische Überlastung der Radnabe vermieden.

Der Halsabschnitt ist in dem sich an den Bereich zum Aufsetzen der Bremsscheibe anschließenden axialen Bereich mit Rippen versehen. Diese "Kühlrippen" lassen sich fertigungstechnisch bei einer Grußnabe einfach realisieren und sorgen für eine gute Wärmeabfuhr. Vorzugsweise sind zur weiteren Verbesserung der Kühlung der Radnabe zwischen den axial verlaufenden Rippen Kanäle ausgebildet, in denen sich eine Luftströmung beim Drehen der Radnabe auf der Achse ausbildet. Vorzugsweise erstrecken sich die Rippen und die Kanäle bis zu einem an den Halsabschnitt angeformten Radflansch.

Die Rippen verlaufen am Außenumfang des Halsabschnittes im wesentlichen in axialer Richtung, so dass die Lüftungswirkung optimiert wird. Es ist auch denkbar, die axialen Rippen durch in Umfangsrichtung verlaufende weitere Rippen miteinander zu verbinden, um auf einfache Weise die Steifigkeit der Radnabe zu erhöhen und damit die Verwendung von Leichtmetallen weiter zu vereinfachten. Die in Umfangsrichtung verlaufenden Rippen können ggf. wiederum diese durchsetzende Öffnungen zur Verbesserung der Luftzufuhr aufweisen.

Durch die Zwangsbelüftung des Nabenkörpers mit kühler Frischluft von der Außenseite des Fahrzeugrades wird eine intensive Wärmeabfuhr aus der Radnabe sowie zusätzlich eine Kühlung der Bremsscheibe erzielt. Hierdurch können nicht nur die Auswirkungen des Wärmeüberganges von der Bremsscheibe auf die Radnabe kompensiert werden, sondern es wird auch die im Radlager entstehende Reibungswärme effizient aus der Radnabe abgeführt und somit das Radlager weniger stark erwärmt. Durch die Kühlung der Radnabe wird sogar die Anwendung von Leichtbauwerkstoffen als Radnabensnaterial denkbar. Mit der Erfindung ist es insbesondere auch möglich, einen Leichtbaustoff wie ein Leichtmetall zur Herstellung der Radnabe einzuset- , zen, da die Radnabe weniger stark erwärmt wird. Durch die gewählte Rippenstruktur wird der Nabenkörper versteift, was ergänzend die Anwendung von Leichtbauwerkstoffen vereinfacht. Denkbar ist es aber auch, dass die Radnabe aus einem Eisenguß oder einem Stahl besteht

Besonders bevorzugt mündet - wie aus der US 5,281,004 bekannt - zumindest ein Teil der Kanäle in Öffnungen im Radflansch, welche den Radflansch durchsetzen. Die Luftdurchtrittsöffnungen vergrößern auf einfache Weise den Luftstrom an der Radnabe und "saugen" bei der Drehung der Radnabe Umgebungsluft durch die Kanäle.

Nachfolgend wird die Erfindung anhand von Ausführungsbeispielen unter Bezug auf die Zeichnung näher beschrieben. Es zeigt:
- Fig.1: eine Seitenansicht einer erfindungsgemäße Radnabe;
- Fig.2: einen Schnitt durch die Radnabe aus Fig. 1 nebst einem Schnitt durch Teile einer Radschüssel und einer Felge und eine Bremsscheibe;
- Fig. 3 und 4: verschiedene perspektivische Ansichten der Radnabe aus Fig. 1;
- Fig. 5: eine perspektivische Ansicht der Radnabe aus Fig. 1 nebst der darauf aufgesetzten Bremsscheibe; und
- Fig.6: eine Seitenansicht einer weiteren erfindungsgemäße Radnabe;
- Fig.7: einen Schnitt durch die Radnabe aus Fig. 6 und einen Schnitt durch die zugehörige Bremsscheibe;
- Fig.8 bis 11: Radnaben und Bremsscheiben nach dem Stand der Technik.

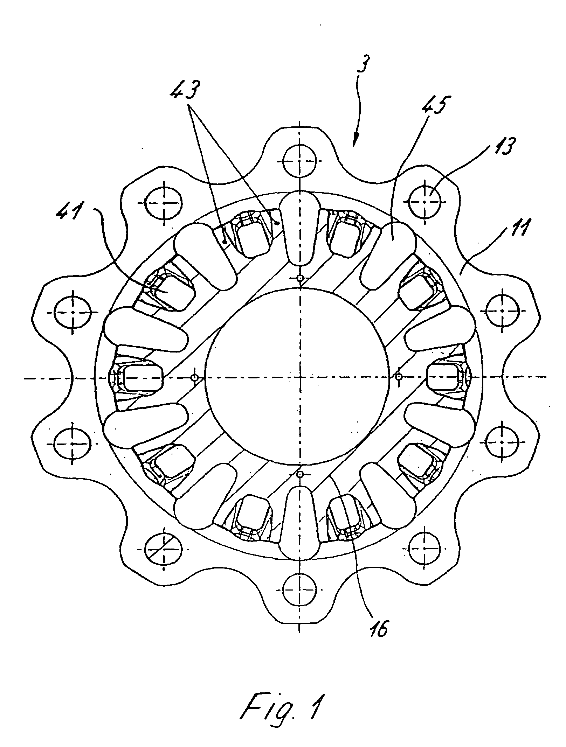

Die in Fig. 1 dargestellte, innenbelüftete Bremsscheibe 1 weist zwei Reibringe 5, 7 auf, die über Stege 9 miteinander verbunden sind.

Die Radnabe 3 mit dem Nabenkörper 16 nach Fig. 1 bis 5 weist hingegen einen integrierten Radflansch 11 mit Bohrungen 13 für (hier nicht dargestellte) Bolzen auf, mit denen die Radnabe 3 an eine Radschüssel 15 anschraubbar ist. An den Radflansch 11 schließt sich ein mit dem Radflansch 11 einstückig verbundener - sich hier leicht verjüngender -hohlzylindrischer Halsabschnitt 17 an, welcher an seinem vom Radflansch 11 ab gewandten Ende mit seinem Innenumfang auf eine Radlageranordnung 19 aufgesetzt ist, die wiederum auf eine hier nicht dargestellte Achse aufsetzbar ist. Der Außenumfang des Halsabschnittes 17 ist an seinem vom Radflansch abgewandten Ende derart ausgebildet, dass auf ihn die Bremsscheibe 1 aufsetzbar ist. Dazu weist der Halbschnitt 17 an seinem Außenumfang Nocken 21 auf, die jeweils an einem ihrer axialen Enden im Außenumfangsbereich jeweils einen Bund 23 aufweisen.

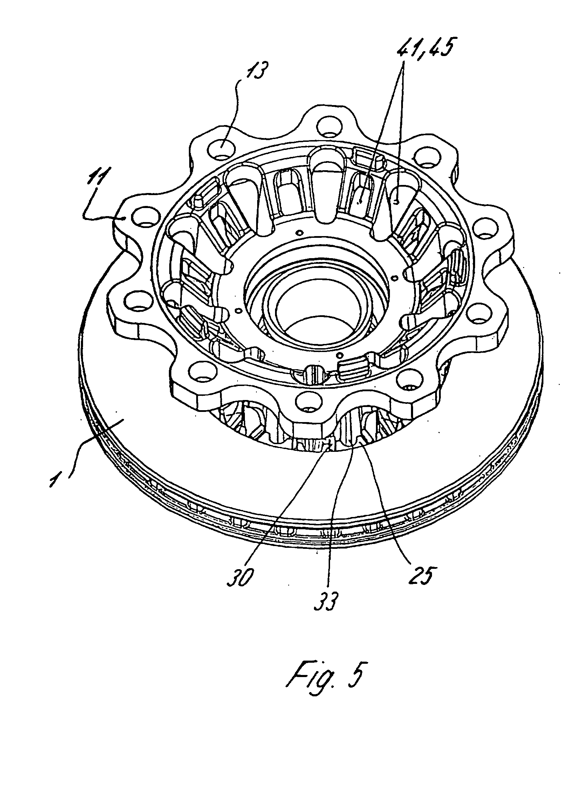

Die Bremsscheibe 1 weist ferner am Innenumfang der Reibringe radial nach innen vorkragende Zähne 25 auf, welche zwischen die Nocken 21 der Radnabe 3 greifen, so dass das Zusammenspiel aus Nocken 21 und Zähnen 25 in Umfangsrichtung die Abstützung der Bremskräfte zwischen Bremsscheibe 1 und Radnabe 3 sicherstellt. In einer axialen Richtung dient der Bund 23 als Sicherung für die Bremsscheibe 1 auf den Nocken 21 der Radnabe 3. In der entgegengesetzten axialen Richtung kann die Bremsscheibe 1 z.B. mittels eines Sprengringes 27, der in eine umlaufende Nut 28 der Radnabe einsetzbar ist oder aber mittels Bolzen und/oder mittels Zwischenelementen 30 (auch zur Verringerung der Wärmeübertragung zwischen Scheibe und Nabe; siehe Fig. 5) gesichert sein.

Zur Kühlung der Bremsscheibe 1 dient neben deren innenbelüfteter Auslegung eine Luftzufuhr am Innenumfang der Bremsscheibe. Hierzu weist die Bremsscheibe Luftkanäle 29 auf, die sich u.a. sich radial von innen durch die Zähne 25 hindurch in den Luftkanal 31 zwischen den Reibringen 5, 7 erstrecken. Axiale Öffnungen 33 (Fig. 5) in den Zähnen 25, welche in die Luftkanäle 29 münden, können die Luftzufuhr weiter optimieren. Die Nocken 21 der Radnabe 3 weisen ferner zur Verbesserung der Luftzufuhr in den Luftkanal 31 der Bremsscheibe 1 Ausnehmungen/Kanäle 35 auf, welche axial zur Seite der Nocken 21 hin offen stehen und die nach außen hin bzw. in radialer Richtung nach außen im Luftkanal 31 der Bremsscheibe 1 münden, was wiederum die Luftzufuhr aus der Umgebung durch die Nocken 21 der Nabe in die innenbelüftete Bremsscheibe verbessert.

Zur Verbesserung der Kühlung 3 der Radnabe wurde deren Geometrie gleich in mehrfacher Hinsicht optimiert. So wurde zur Vergrößerung der Oberfläche - und somit zur Verstärkung der Energieabgabe an die Umgebungsluft - die Oberfläche am Außenumfang der Radnabe 3 vergrößert, und zwar insbesondere im Bereich des Halsabschnittes 17, und zwar wiederum insbesondere in dem sich an die Nocken 21 der Radnabe 3 anschließenden axialen Bereich des Halsabschnittes, insbesondere im Bereich des Halsabschnittes 17 zwischen den Nocken 21 der Radnabe 3 und dem Radflansch 11.

So weist der Halsabschnitt eine Reihe sich axial erstreckender Kanäle 37,39 auf, wobei die Kanäle 37 zwischen den Nocken 21 der Radnabe 3 ansetzen und dann nutenartig axial am Außenumfang des weiteren Halsabschnittes 17 verlaufen. Sie münden in die Luftzufuhr in den Bereich der Radnabe 3 optimierende Öffnungen 41, weiche den Radflansch durchsetzen.

An die Nocken 21 wurden im Bereich des Halsabschnittes 17 jeweils zwei Rippen 43 angeformt, die sich über den Bereich zwischen den eigentlichen Nocken 21 und der Radnabe 3 erstrecken, wobei sich die Kanäle 39 zwischen den Rippen 43 ausbilden. Auch die Kanäle 39 münden in Öffnungen 45, welche den Radflansch 11 durchsetzen. Ergänzend/alternativ (hier nicht dargestellt) ist es auch denkbar, anstelle der offenen Kanäle 39 Bohrungen in dem Halsabschnitt 17 auszubilden, welche sich durch den Radflansch nach außen erstrecken.

Es wird damit eine Radnaben/Bremsscheiben -Kombination mit einer ebenen zahnangebundenen Bremsscheibe 1 geschaffen, bei welcher die frei liegende Radnabenoberfläche im Sinne einer verbesserten Wärmeabfuhr aus der Radnabe 3 und der Bremsscheibe 1 genutzt wird. Auf diese Weise wird unkompliziert die thermische Belastung der Radnabe 3 herabgesetzt und eine thermische Überlastung vermieden. Durch die Absenkung der Radnabentemperaturen wird femer die Verwendung von Leichtbauwerkstoffen als Radnabenmaterial möglich.

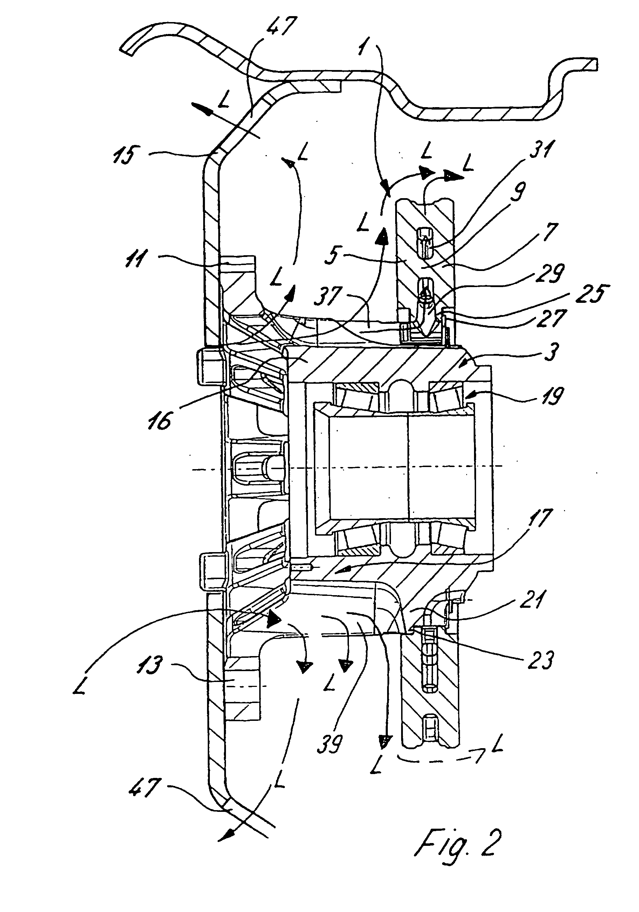

Die kühlenden Luftströmungen werden in Fig. 2 rein schematisch durch Pfeile L angedeutet. Es wird insbesondere eine Luftströmung durch die Öffnungen 41 und die Öffnungen 45 an den Rippen 43 vorbei in Richtung der Bremsscheibe 1 geschaffen, was einerseits zu einer Kühlung der Radnabe 3 und darüber hinaus auch zu einer zusätzlichen Kühlung der Bremsscheibenoberfläche zumindest auf der zur Radschüssel 15 weisenden Seite der Bremsscheibe 1 führt. Durch weitere Öffnungen 47 in der Radschüssel kann ein Teil der erwärmten Luft wieder aus dem Raum um die Radnabe 3 entweichen.

Nach Fig. 1 bis 7 sind die Rippen 43 oder Stege so angeordnet und gestaltet, dass sie bei rotierender Radnabe 3 eine Luftzirkulation im Sinne eines Radiallüfters erzeugen. Die Luftströmung wird ferner durch die Gestaltung der Lufteintrittsöffnungen und der zwischen den Rippen oder Stegen gebildeten Luftkanäle so geführt, dass Frischluft aus der Umgebung des Fahrzeugrades von der Außenseite des Radflansches 11 durch die Lufteintrittsöffnungen 41, 45 in den Bereich zwischen den Rippen 43 oder Stegen eintritt, dass die eintretende Luft durch die Rippen 43 bei rotierender Radnabe 3 radial nach außen gefördert wird, dann die radial abströmende Luft die Bremsscheibenflächen überstreicht und schließlich durch die Öffnungen 47 in der Radschüssel 15 des Fahrzeugrades nach Außen entweicht und/oder über den Bremsscheibenaußendurchmesser zur Innenseite des Fahrzeugrades gefördert wird.

Anstelle einer im wesentlichen axialen Ausrichtung der Kanäle 37, 39 können diese auch beispielsweise schräg bzw. geneigt zur Radachse ausgerichtet werden (nicht dargestellt und nicht unter den Wortlant des Anspruchs 1 fallend).

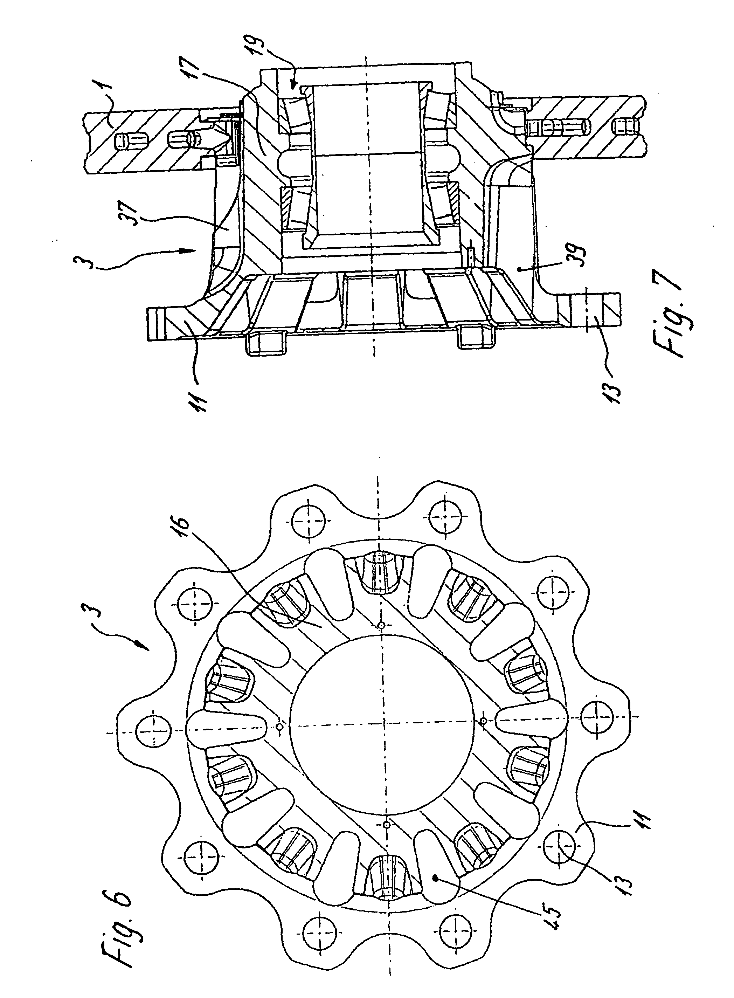

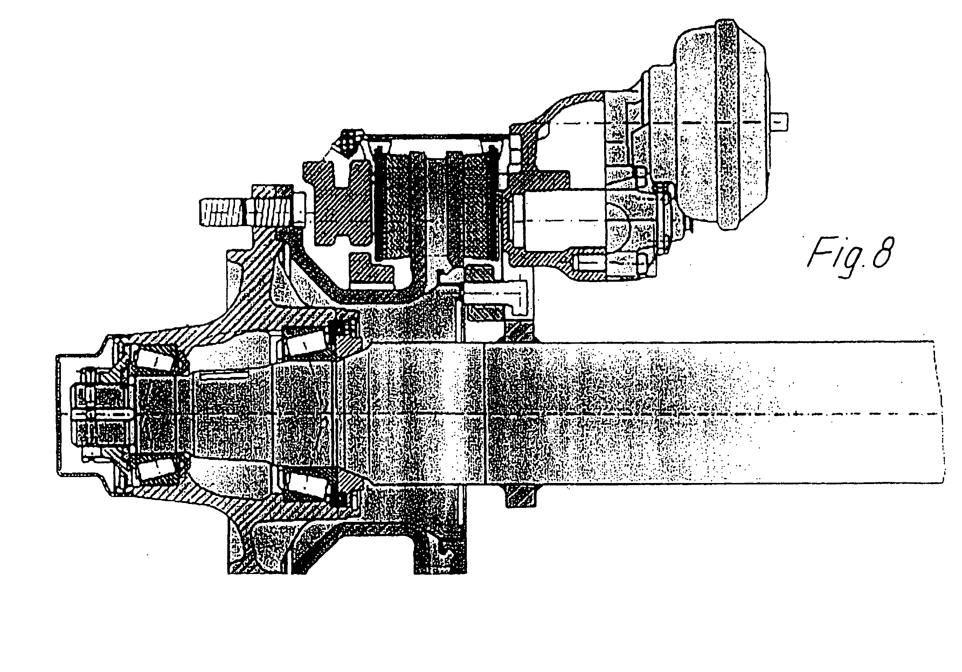

Fig. 6 und 7 zeigen eine Variante der Radnabe bei welcher der Radflansch nur Lufteintrittsöffnungen 41 in die Luftkanäle 37 hinter den Bremsscheibenzähnen 25 aufweist, aber keine weiteren Lufteinthttsöffnungen 45 in die Kanäle 39 hinter den Nocken 21 auf. Diese Ausführung kann dort sinnvoll sein, wo eine besonders hohe Tragfähigkeit des Radflansches 3 erzielt werden soll.

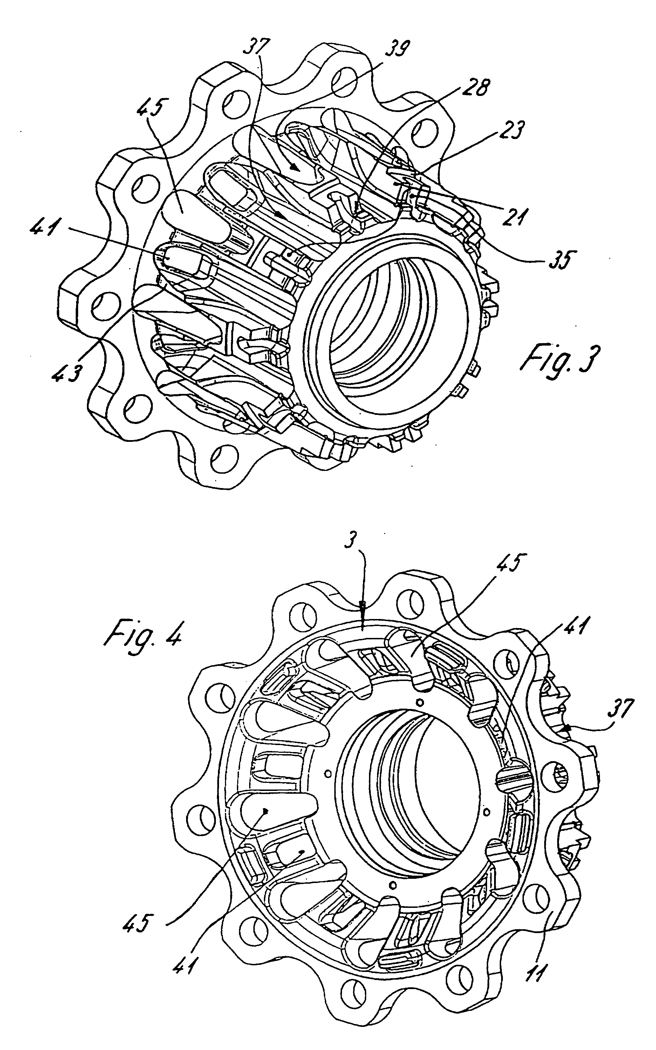

Durch die gewählte Gestaltung des Nabenkörpers entfallen die bei der Konstruktion nach Fig. 4 bestehenden Hinterschneidungen hinter den Nabenzähnen, so dass bei der Herstellung des Gußteiles auf Außenkerne bzw. Seitenschieber verzichtet und der Nabenkörper (im wesentlichen der Halsabschnitt 17) somit einfach und kostengünstig hergestellt werden kann.

Der Nabenkörper kann aus für Radnaben üblichen Eisengußwerkstoffen wie z.B. einem Kugelgraphitguß hergestellt werden. Aufgrund der versteifenden Formgebung sowie der guten Kühlbedingungen bietet sich auch die Verwendung eines Leichtbauwerkstoffes an.

Als Leichtbauwerkstoff kann vorzugsweise eine warm ausgehärtete Aluminium-Gußlegierung verwendet werden (vorzugsweise ein GK Al Si 7 Mg wa oder ein GK Al Si 10 Mg wa).

### Bezugszeichen

- Bremsscheibe: 1
- Radnabe: 3
- Reibringe: 5,7
- Stege: 9
- Radflansch: 11
- Bohrungen: 13
- Radschüssel: 15
- Nabenkörper: 16
- Halsabschnitt: 17
- Radlageranordnung: 19
- Nocken: 21
- Bund: 23
- Zähne: 25
- Sprengringes: 27
- Umlaufende Nut: 28
- Luftkanäle: 29
- Zwischenelemente: 30
- Luftkanal: 31
- Öffnungen: 33
- Ausnehmungen/Kanäle: 35
- Kanäle: 37, 39
- Öffnungen: 41
- Rippen: 43
- Öffnungen: 45
- Öffnungen: 47
- Pfeile: L

## Patentansprüche

1. Radnabe zur Aufnahme einer Bremsscheibe, insbesondere Radnabe für Nutzfahrzeuge, mit einem an einen Radflansch angeformten Nabenkörper, der einen Halsabschnitt (17) aufweist, der zur Aufnahme der Bremsscheibe (1) ausgelegt ist, wobei der Halsabschnitt (17) in dem sich an den Bereich zum Aufsetzen der Bremsscheibe anschließenden axialen Bereich mit Rippen versehen ist, die am Außenumfang des Halsabschnittes (17) im wesentlichen in axialer Richtung verlaufen, wobei sich Kanäle (37, 39) zwischen den Rippen (43) ausbilden, **dadurch gekennzeichnet, dass** der Außenumfang des Halsabschnittes (17) an seinem vom Radflansch (11) abgewandten Ende Nocken (21) aufweist, die jeweils an einem ihrer axialen Enden im Außenumfangsbereich jeweils einen Bund (23) zur axialen Sicherung der Bremsscheibe (1) aufweisen, wobei an die Nocken (21) im Bereich des Halsabschnittes (17) jeweils zwei der Rippen (43) angeformt sind, die sich über den Bereich zwischen den eigentlichen Nocken (21) und dem Radflansch (11) erstrecken, wobei erste der Kanäle (37) zwischen den Nocken (21) der Radnabe (3) ansetzen und dann nutenartig axial am Außenumfang des Halsabschnittes (17) verlaufen.

2. Radnabe nach Anspruch 1, **dadurch gekennzeichnet, dass** die Rippen (43) am Außenumfang des Halsabschnittes (17) geneigt zur Radachse verlaufen.

3. Radnabe nach einem der vorstehenden Ansprüche, **dadurch gekennzeichnet, dass** sich die Rippen (43) und die Kanäle (37, 39) bis zu einem an den Halsabschnitt (17) angeformten Radflansch (11) erstrecken.

4. Radnabe nach einem der vorstehenden Ansprüche, **dadurch gekennzeichnet, dass** die Kanäle (37, 39) zwischen den Rippen (43) zumindest teilweise in Öffnungen (45) münden, welche den Radflansch (11) durchsetzen.

5. Radnabe nach Anspruch 4, **dadurch gekennzeichnet, dass** sämtliche Kanäle (37, 39) in den Öffnungen (41, 45) münden.

6. Radnabe nach einem der vorstehenden Ansprüche, **dadurch gekennzeichnet, dass** die Radnabe (3) aus einem Leichtmetall besteht.

7. Radnabe nach einem der vorstehenden Ansprüche 1 - 5, **dadurch gekennzeichnet, dass** die Radnabe (3) aus einem Eisenguss oder einem Stahl besteht.

8. Radnabe nach einem der vorstehenden Ansprüche, **dadurch gekennzeichnet, dass** der Halsabschnitt (17) zum Aufsetzen auf eine Radlageranordnung (19) ausgebildet ist, die zur Aufnahme einer Achse ausgelegt ist.

## Claims

1. Wheel hub for holding a brake disc, in particular a wheel hub for commercial vehicles, with a hub body formed on a wheel flange, which has a neck section (17) designed to receive the brake disc (1), such that the neck section (17) is provided with ribs in the axial area adjacent to the area onto which the brake disc is to be fitted, the said ribs extending on the outer circumference of the neck section (17) essentially in the axial direction, such that channels (37, 39) are formed between the ribs (37, 39),
**characterised in that** on its end away from the wheel flange (11) the outer circumference of the neck section (17) has cams (21), each of which has at its axial end in the outer circumference area a shoulder (23) for the axial securing of the brake disc (I), such that on the cams (21) in the area of the neck section (17) in each case two of the said ribs (43) are formed, these extending along the area between the cams (21) themselves and the wheel flange (11), so that the channels (37) first begin between the cams (21) of the wheel hub (3) and then extend as grooves axially on the outer circumference of the neck section (17).

2. Wheel hub according to Claim 1, **characterised in that** the ribs (43) on the outer circumference of the neck section (17) extend at an inclination to the wheel axis.

3. Wheel hub according to either of the preceding claims, **characterised in that** the ribs (43) and the channels (37, 39) extend as far as a wheel flange (11) formed on the neck section ( 17).

4. Wheel hub according to any of the preceding claims, **characterised in that** at least some of the channels (37, 39) between the ribs (43) open into apertures (45) that pass through the wheel flange (11).

5. Wheel hub according to Claim 4, **characterised in that** all the channels (37, 39) open into the said apertures (41, 45).

6. Wheel hub according to any of the preceding claims, **characterised in that** the wheel hub (3) is made of a light metal.

7. Wheel hub according to any of Claims 1 to 5 above, **characterised in that** the wheel hub (3) is made of a cast iron or a steel.

8. Wheel hub according to any of the preceding claims, **characterised in that** the neck section (17) is made to be fitted onto a wheel bearing arrangement (19), which is designed to hold an axle.

## Revendications

1. Moyeu de roue pour recevoir un disque de frein, en particulier moyeu de roue pour des véhicules utilitaires, comprenant une pièce de moyeu, qui est formée sur un flasque de roue, qui a une partie (17) formant col, et qui est destinée à recevoir le disque (1) de frein, la partie (17) formant col étant pourvue, dans la région axiale se raccordant à la région destinée à la pose du disque de frein, de nervures qui s'étendent sensiblement en direction axiale sur le pourtour extérieur de la partie (17) formant col, des canaux (37, 39) se formant entre les nervures (43), **caractérisé en ce que** le pourtour extérieur de la partie (17) formant col comporte, à son extrémité opposée au flasque (11) de roue, des mentonnets (21) qui comportent chacun à une de leurs extrémités axiales, dans la région de pourtour extérieur, un collet (23) respectif pour l'assujettissement axial du disque (1) de frein, deux nervures (43) étant respectivement formées sur les mentonnets (21) dans la région de la partie (17) formant col, lesquelles s'étendent sur la région comprise entre les mentonnets (21) proprement dits et le flasque (11) de roue, des premiers canaux (37) se plaçant entre les mentonnets (21) du moyeu (3) de roue puis s'étendant axialement, à la manière de rainures, sur le pourtour extérieur de la partie (17) formant col.

2. Moyeu de roue suivant la revendication 1, **caractérisé en ce que** les nervures (43) sur le pourtour extérieur de la partie (17) formant col s'étendent en inclinaison par rapport à l'axe de la roue.

3. Moyeu de roue suivant l'une des revendications précédentes, **caractérisé en ce que** les nervures (43) et les canaux (37, 39) s'étendent jusqu'à un flasque (11 ) de roue formé sur la partie (17) formant col.

4. Moyeu de roue suivant l'une des revendications précédentes, **caractérisé en ce que** les canaux (37, 39) entre les nervures (43) débouchent au moins pour partie dans des ouvertures (45) qui traversent le flasque (11) de roue.

5. Moyeu de roue suivant la revendication 4, **caractérisé en ce que** tous les canaux (37, 39) débouchent dans les ouvertures (41, 45).

6. Moyeu de roue suivant l'une des revendications précédentes, **caractérisé en ce que** le moyeu (3) de roue est réalisé en métal léger.

7. Moyeu de roue suivant l'une des revendications précédentes 1 à 5, **caractérisé en ce que** le moyeu (3) de roue est réalisé en fonte ou en acier.

8. Moyeu de roue suivant l'une des revendications précédentes, **caractérisé en ce que** la partie (17) formant col est conçue pour être posée sur un ensemble (19) de roulement de roue qui est destiné à recevoir un essieu.
